# EUROPEAN PATENT APPLICATION

(11) **EP 1 768 320 A2**
(43) Date of publication of application: **28.03.2007**
(21) Application number: 06251378.3
(22) Date of filing: 15.03.2006
(51) Int. Cl.: H04L 12/46, H04L 12/56, H04L 29/14

(54) **Information processing apparatuses, communication method, communication load decentralizing method and communication system**

(30) Priority: 22.09.2005 JP 2005276868
(71) Applicant: FUJITSU LIMITED, Kawasaki-shi, Kanagawa 211-8588 (JP)
(72) Inventor: Takeda, Kenichiro, Fujitsu Limited, Kawasaki-shi, Kanagawa 211-8588 (JP)
(74) Representative: Hitching, Peter Matthew

(57) **Abstract**

An information processing apparatus (300) according to the present invention is capable of connecting to and communicating with a plurality of electronic devices (308, 309). The information processing apparatus includes a transmission/reception controlling unit configured to control transmission/reception of data; a plurality of connecting units (304 to 307) connected to the plurality of electronic devices; a virtual connecting unit generating unit configured to generate a virtual connecting unit by unifying at least two of the plurality of connecting units into a virtual connecting unit; a managing unit configured to group electronic device connecting units of the electronic device connected to the connecting units constituting the virtual connecting unit and manage a virtual transmission path including the virtual connecting unit and the group of the electronic device connecting units; and a switching unit configured to make the switch to another virtual transmission path, if any, when the managing unit determines that an error has occurred in the virtual transmission path.

## Description

The present invention relates to techniques of enhancing reliability of networks. Particularly, the present invention relates to realizing redundancy of a transmission path in order to construct a more reliable network while realizing decentralization of a communication load in a TCP/IP (transmission control protocol/Internet protocol) communication in a LAN (local area network) environment using Ethernet, which is becoming mainstream in the present network environment.

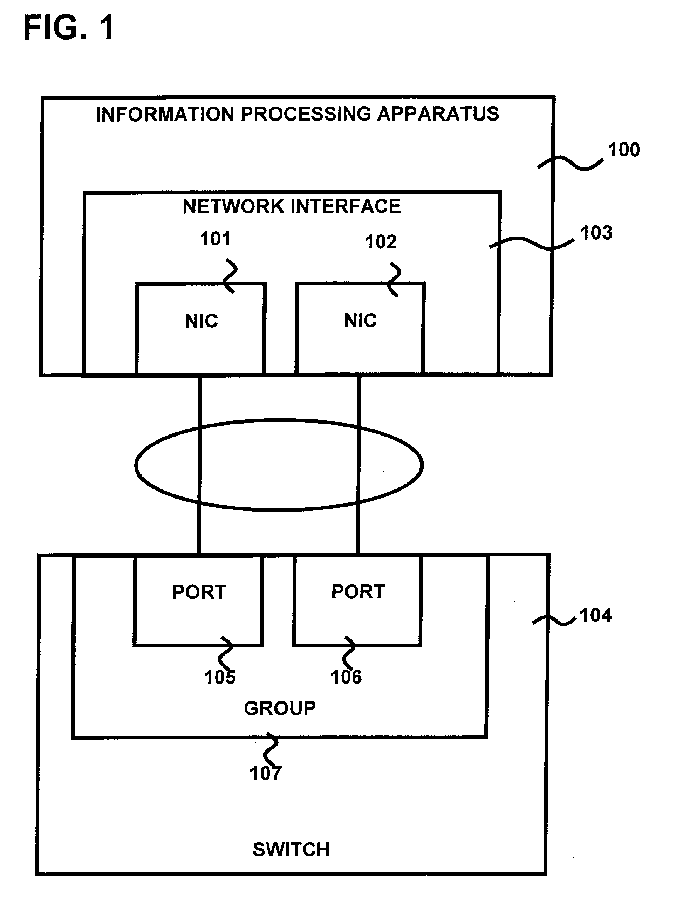

Hitherto, when a TCP/IP communication is performed in a LAN environment using Ethernet, the configuration shown in Fig. 1 has been used in order to decentralize a communication load and to make a transmission path redundant by unifying a plurality of network interfaces.

Fig. 1 shows an example of the configuration of a system for decentralizing a communication load and for making a transmission path redundant.

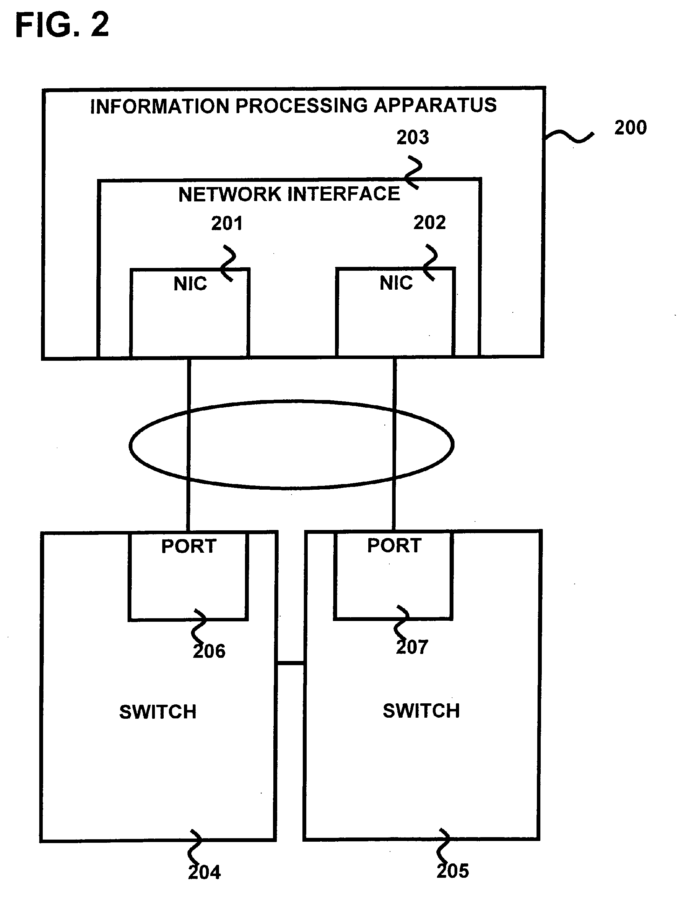

This system includes an information processing apparatus 100 and a switch 104. The information processing apparatus 100 includes NICs (network interface cards) 101 and 102, whereas the switch 104 includes ports 105 and 106. The ellipse shown in Fig. 1 represents that the NICs are unified. Also, the ellipses shown in Figs. 2, 3, and 5 have the same meaning.

The NIC 101 connects to the port 105 through a transmission path. On the other hand, the NIC 102 connects to the port 106 through another transmission path. These two NICs 101 and 102 mounted on the information processing apparatus 100 are unified into a virtual network interface (i/f1) having an IP address and a MAC (media access control) address.

Also, in the switch 104, to which the NICs 101 and 102 unified into the network interface 103 are connected, the ports 105 and 106 respectively connecting to the NICs 101 and 102 are included in a group 107.

With this configuration, the double transmission path is provided for the virtual IP address, which enables decentralization of a load of data transmission.

Even if something wrong occurs in one of the NICs, the other NIC that normally operates can be used to transmit data through one of the two transmission paths as long as both of the NICs 101 and 102 do not become unusable. In this way, a reduced function to continue communication can be provided.

The reason why the ports 105 and 106 are set as the group 107 in the switch 104 is as follows. That is, a broadcast frame of transmitting data to an unspecified number of users that accessed one of the ports in the switch 104, e.g., the port 105, and a multicast frame of transmitting the same data to a plurality of specified destinations do not transferred to the other port 106 in the group 107, so that a loop of the frame in the network can be prevented from occurring.

Typically, ports cannot be grouped over a plurality of switches. Therefore, both of the NICs 101 and 102 need to be connected to the same switch 104 and then the ports need to be grouped in the switch 104.

The following Patent Documents disclose an information processing apparatus for decentralizing a communication load and making a transmission path redundant.

In the file transfer system described in Japanese Patent Application Laid-Open No. 9-305502, a plurality of associations corresponding to the system are grouped into association groups based on an attribute of a physical line or the like. With this configuration, the transfer load of the respective association groups is controlled, or an operation of switching to a reserved association group is performed when a trouble occurs in one of the association groups.

On the other hand, Japanese Patent Application Laid-Open No. 8-51440 describes the following file transfer system. Inside a cell-oriented communication network, information cell streams are duplicated by a connection switching device positioned at the start point of a path pair. The respective information cell streams are separately supplied to the connection switching device positioned at the terminating end of the path pair through an operation path and an alternate path assigned corresponding to the operation path of the path pair. The connection switching device is provided with distributed one synchronization device or distributed plural synchronization devices and both information cell streams are synchronized while transferring the information cell stream through the operation path.

In the known information processing apparatus, however, all of the unified NICs need to be connected to the same switch. With this configuration, if the switch connecting thereto breaks down, the communication performed in the NICs 101 and 102 stops.

In order to avoid this problem, the system for decentralizing a communication load and making a transmission path redundant shown in Fig. 2 is suggested.

Fig. 2 shows an example of the configuration of the communication system.

This system includes an information processing apparatus 200 and switches 204 and 205. The information processing apparatus 200 includes NICs 201 and 202. The switch 204 includes a port 206. The switch 205 includes a port 207.

The two NICs 201 and 202 mounted on the information processing apparatus 200 are unified into a virtual network interface 203 having an IP address and a MAC address.

The switches 204 and 205, which connect to the NICs 201 and 202 unified into the network interface 203, connect to each other through a cable or the like.

In the communication system shown in Fig. 2, however, since the NICs 201 and 202 connect to the different switches 204 and 205, respectively, the switches 204 and 205 cannot recognize that the NICs 201 and 202 are unified together in the information processing apparatus 200. In this case, the following problem arises.

For example, the switches 204 and 205 recognize that there is an abnormal environment where two network interfaces having the same IP address and MAC address exist on the network. This causes a problem of unstabilizing a system operation.

Further, if a broadcast frame output from the NIC 201 is transferred from the switch 204 to the switch 205 and is then transferred to the NIC 202, the information processing apparatus 200 wrongly recognizes that there exists another network interface having the same IP address and MAC address on the network.

In order to avoid such a problem, the following redundant configuration may be accepted. That is, a plurality of virtual interfaces, in each of which a plurality of NICs are unified, connect to different switches. Further, external monitoring/switching mechanisms are combined thereto.

However, simply combining "a technique of unifying a plurality of transmission paths into a virtual transmission path" and "a technique of switching redundant transmission paths" according to the known art will cause complexity in management. That is, a virtual interface is generated for each switch connected and a virtual interface to realize redundancy is further generated, which results in a hierarchical construction.

Furthermore, IP addresses need to be assigned to the respective virtual interfaces corresponding to the respective switches and the virtual interface to realize redundancy. With this configuration, a plurality of IP addresses need to be managed, which results in further complexity in management and an increased burden of manager.

Typically, in a technique of unifying a plurality of transmission paths into a virtual transmission path and decentralizing a communication load in an environment using Ethernet, the technique itself has a reduced function as described above.

In such a technique, communication can be continued until all of the unified transmission paths are broken down, so that the upper-layer application cannot detect a failure in the transmission path(s). Therefore, if a switching function is simply combined, the bandwidth of an active path reduces until switching from the active path to a standby path completes. Herein, the active path is a transmission path that is unified to decentralize a communication load and that is used for communication and transmission, whereas the standby path is a transmission path that is unified to decentralize a communication load and that is used when the active path is broken down and in response to a switching instruction from the information processing apparatus.

It is desirable to decentralize a data transmission load by simultaneously using a plurality of NICs mounted on an information processing apparatus in a LAN environment using Ethernet. It is futher desirable to switch transmission paths including switches connected while ensuring a communication bandwidth so as to realize redundancy.

According to an embodiment of an aspect of the present invention, there is provided an information processing apparatus capable of connecting to a plurality of electronic devices and communicating with the electronic devices. The information processing apparatus includes: a transmission/reception controlling unit configured to control transmission/reception of data; a plurality of connecting units connected to the plurality of electronic devices; a virtual connecting unit generating unit configured to generate a virtual connecting unit by unifying at least two of the plurality of connecting units into a virtual connecting unit; a managing unit configured to group electronic device connecting units of the electronic device connected to the connecting units constituting the virtual connecting unit and manage a virtual transmission path including the virtual connecting unit and the group of the electronic device connecting units; and a switching unit configured to make the switch to another virtual transmission path, if any, when the managing unit determines that an error has occurred in the virtual transmission path.

Preferably, the switching unit abandons data that is transmitted during switching from the virtual transmission path where an error has occurred to another virtual transmission path.

Preferably, the switching unit retransmits the abandoned data through the connecting units after the switching from the virtual transmission path where an error has occurred to another virtual transmission path has completed.

According to an embodiment of another aspect of the present invention, there is provided a communication method for communicating with an electronic device via a first connecting device and a second connecting device, each including a plurality of connecting units. The communication method includes the steps of: determining whether a communication error has occurred in at least the presently used connecting device among the first connecting device and the second connecting device; stopping the communication via the presently used connecting device based on the determination result; making the switch from the presently used connecting device to the other connecting device by referring to information about the connection status of the connecting devices; and restarting communication with the electronic device via the other connecting device.

According to an embodiment of another aspect of the present invention, there is provided a communication program for communicating with an electronic device via a first connecting device and a second connecting device, each including a plurality of connecting units. The communication program allows a computer to execute the steps of: determining whether a communication error has occurred in at least the presently used connecting device among the first connecting device and the second connecting device; stopping the communication via the presently used connecting device based on the determination result; making the switch from the presently used connecting device to the other connecting device by referring to information about the connection status of the connecting devices; and restarting communication with the electronic device via the other connecting device.

In information processing apparatus embodying the present invention, a plurality of network interfaces can be unified into a virtual network interface. Further, transmission paths including switches as well as transmission paths between NICs and the switches may be made redundant. With this configuration, even if one of the switches breaks down, another switch can be used to continue communication.

Switching between the switches may be performed in units of NICs unified for each connected switch. Therefore, the switching can be performed while ensuring a communication bandwidth.

Accordingly, a more reliable network than that of the known art can be constructed while ensuring a broadband network.

Now, the file transfer system described in Japanese Patent Application Laid-Open No. 9-305502 is compared with information processing apparatus embodying the present invention. In the file transfer system described in Japanese Patent Application Laid-Open No. 9-305502, load decentralizing and switching functions are provided in associations. On the other hand, in information processing apparatus embodying the present invention, load decentralizing and switching functions are provided in a lower-layer NIC driver. Furthermore, in one embodiment of the present invention, the upper layer is allowed to regard unified transmission paths as a virtual interface. Therefore, load decentralizing and switching functions need not be added to the upper-layer application, and thus the upper-layer application can deal with the interface used for communication in the same manner as in a known non-virtual interface.

The file transfer system described in Japanese Patent Application Laid-Open No. 8-5144 is compared to information processing apparatus embodying the present invention. The file transfer system described in Japanese Patent Application Laid-Open No. 8-5144 has a function of switching between a transmission path to transfer data (active path) and a reserved transmission path (standby path). On the other hand, in one embodiment of the present invention, a plurality of active paths and a plurality of standby paths are provided, and decentralization of a load is realized at the same time.

Reference will now be made, by way of example, to the accompanying drawings, in which:
Fig. 1 shows an example of the configuration of a system for decentralizing a communication load and making a transmission path redundant according to a known art;
Fig. 2 shows an example of the configuration of a system for decentralizing a communication load and making a transmission path redundant according to another known art;
Fig. 3 shows an example of the configuration of a system for decentralizing a communication load and making a transmission path redundant according to an embodiment of the present invention;
Fig. 4 shows a state where an error has occurred in a transmission path in the system for decentralizing a communication load and making a transmission path redundant according to an embodiment of the present invention;
Fig. 5 shows a state where switching between transmission paths has completed in the system for decentralizing a communication load and making a transmission path redundant according to an embodiment of the present invention;
Figs. 6A and 6B show examples of internal tables; and
Fig. 7 is a flowchart showing a process of switching the transmission paths according to an embodiment of the present invention.

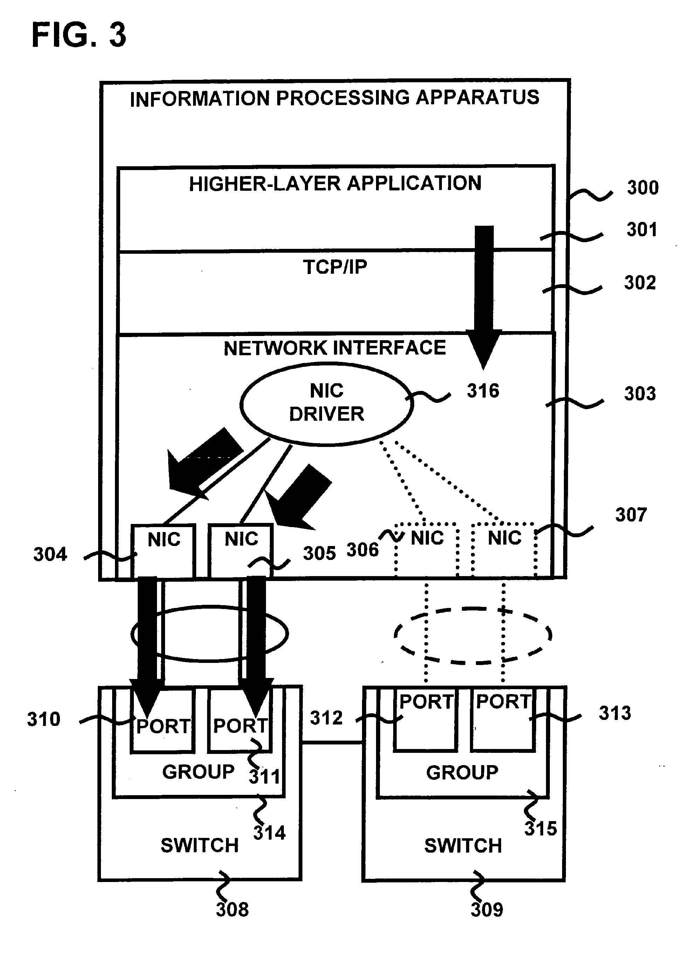

Fig. 3 shows an example of the configuration of a communication system according to an embodiment of the present invention.

The communication system according to the embodiment operates in a LAN environment using Ethernet.

This system includes an information processing apparatus 300, such as a server, and switches 308 and 309. The information processing apparatus 300 includes NICs 304, 305, 306, and 307. The switch 308 includes ports 310 and 311. The switch 309 includes ports 312 and 313.

The information processing apparatus 300 connects to another information processing apparatus via the switches 308 and 309 so as to communicate with each other. These information processing apparatuses are connected by a known technique, and thus the details thereof are not described.

The four NICs 304 to 307 mounted on the information processing apparatus 300 are unified into a virtual network interface 303 having an IP address and a MAC address. An NIC driver 316 assigns an IP address and a MAC address to the NICs 304 to 307. Accordingly, the NIC driver 316 allows a higher-layer application 301 and a TCP/IP 302 to recognize the NICs 304 to 307 as a virtual interface, and distributes data received from the upper layer inside the NIC driver 316 so as to output the data to transmission paths. The bold arrows shown in the figure indicate a flow of data, such as packets.

The NICs 304 and 305 connect to the switch 308 via the ports 310 and 311, respectively. Likewise, the NICs 306 and 307 connect to the switch 309 via the ports 312 and 313, respectively. The NIC 304 and the port 310, the NIC 305 and the port 311, the NIC 306 and the port 312, and the NIC 307 and the port 313 connect to each other through different transmission paths, respectively. Therefore, the NICs 304 and 305 connect to the switch 308 through two transmission paths, ditto for the NICs 306 and 307 and the switch 309.

The ports in the same switch are unified into a group. For example, the ports 310 and 311 are unified into a group 314, and the ports 312 and 313 are unified into a group 315.

A user stores information about which NIC connects to which switch in the NIC driver 316 in advance based on information defined by a setting file or the like.

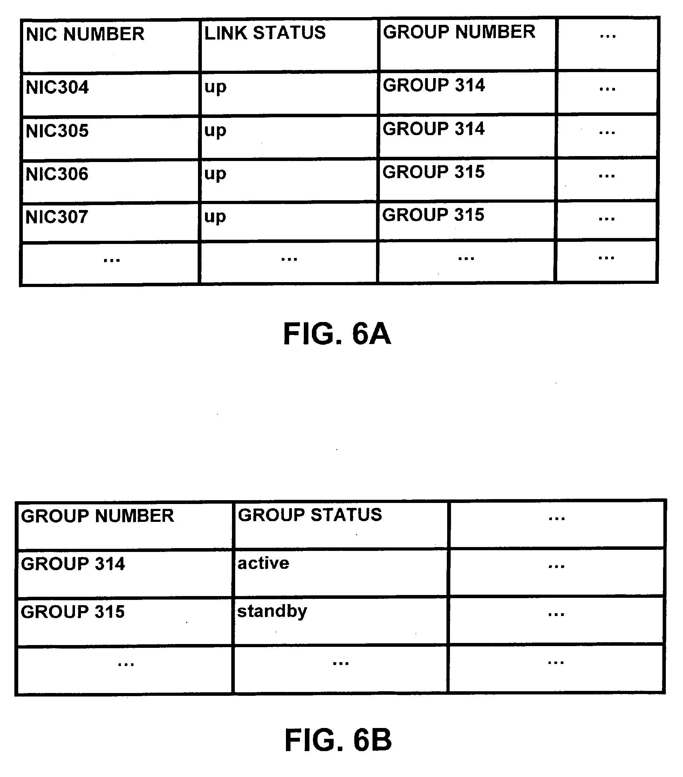

Figs. 6A and 6B show examples of tables stored in the NIC driver 316.

Fig. 6A is a table showing the link status of each NIC and the group to which the NIC belongs. In the table, the left column shows NIC numbers of the respective NICs mounted on the information processing apparatus. The center column shows the link status of the respective NICs. The right column shows the groups to which the switches connecting to the NICs belong. Different switches have different group numbers. Herein, the link status indicates whether the NIC connects to a port of a switch and is in a communicatable status. For example, "up" represents that the NIC is in a communicatable status. The four NICs 304, 305, 306, and 307 are provided in this embodiment. However, the present invention is not limited to this configuration, but the information processing apparatus may be provided with five or more NICs. Therefore, more information can be defined in the same manner for more NICs in the lower rows in the setting file. Of course, the number of NICs may be three or less. Further, other information than the link status and the group may be stored in the table for the respective NICs.

Fig. 6B is a table showing the group numbers of the groups of the switches connecting to the respective NICs and the group status.

The user selects a group connecting to the NIC to be used for data transmission, sets the group status of the group number selected as an active path to "active", and sets the group status of the group number of a transmission path that is not used for data transmission to "standby". Since three or more groups may be provided, more information can be defined in the same manner for other groups in the lower rows of the setting file. Further, other setting information than the group status may be set for the groups. In this embodiment, the transmission path between the NICs 304 and 305 and the group 314 is set as an active path (active) and the transmission path between the NICs 306 and 307 and the group 315 is set as a standby path (standby).

While the network interface is active, the NIC driver 316 selects the NICs 304 and 305 as receivers of data in accordance with the information about the connection between the NICs and the switches, which is the setting information store in the setting file.

If the upper-layer application 301 outputs data to the network interface 303, the data is distributed to the NICs 304 and 305 by the NIC driver 316 and is output to the transmission paths connecting the NICs and the ports. Herein, the NIC driver 316 performs activation of the NICs, e.g., starts a transmission/reception engine of the NICs, so that the NICs 304 and 305 are brought into a communicatable status (a status where a process required for data transmission from the NIC driver to the NICs has completed).

On the other hand, the side of the NICs 306 and 307 is set as a standby path. That is, the NICs 306 and 307 are physically linked up with the ports 312 and 313 of the switch 309, but data transmission is not performed therebetween.

The control of the NICs 306 and 307 by the NIC driver 316 depends on the hardware specification of the NICs. For example, the NIC driver 316 stops the transmission/reception engine of the NICs so as to make an inactive state where data transmission/reception is not performed. Further, the NIC driver 316 monitors the status of the transmission paths between the NICs and the switches by referring to the hard link status of the respective NICs. The method of monitoring the link status depends on the hardware specification of the NIC used. For example, the NIC driver 316 detects an error in a transmission path by receiving an interruptive notification when link-down of the hardware of an NIC is detected or when a link-down state occurs during polling to the link status of the hardware of the NIC.

The connecting unit described in the summary of the invention corresponds to the NIC of this embodiment. The processes performed in the virtual connecting unit generating unit, the managing unit, and the switching unit are performed by the NIC driver 316 in the embodiment. The transmission/reception controlling unit corresponds to a controlling unit for controlling the upper-layer application 301, although the controlling unit is not described in detail in this embodiment. The controlling unit includes, for example, a CPU (central processing unit), a cache memory, and so on, and performs predetermined information processing by executing a predetermined program (the upper-layer application or the like) stored in a hard disk or the like.

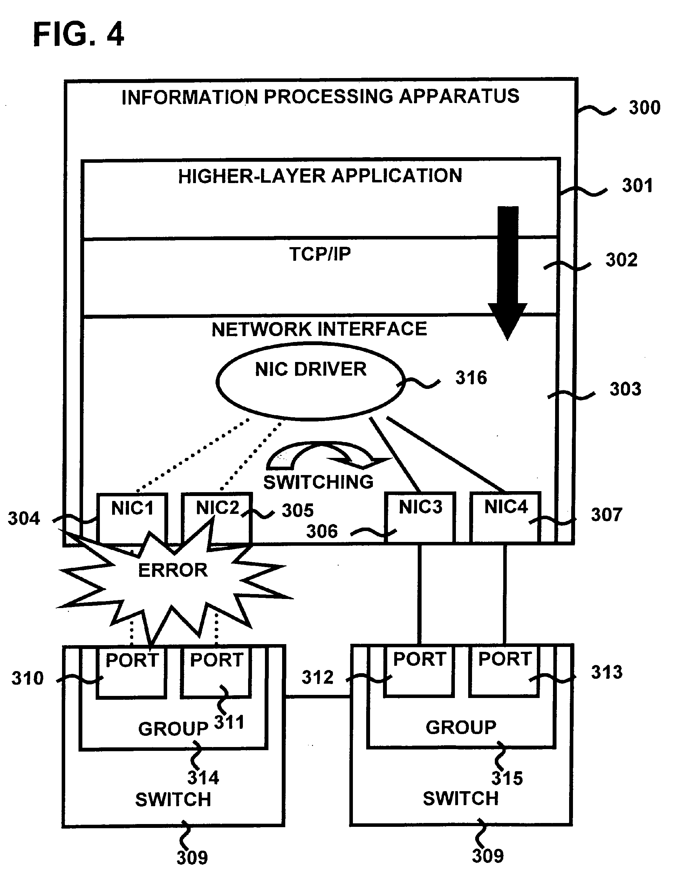

Fig. 4 shows an example of the system in a case where an error occurs in the transmission path between the NICs 304 and 305 and the group 314.

When the NIC driver 316 detects that an error has occurred in the transmission path between the NICs 304 and 305 and the group 314, the NIC driver 316 switches the transmission paths. More specifically, the NIC driver 316 makes the switch from the transmission path between the NICs 304 and 305 and the group 314, functioning as an active path, to the transmission path between the NICs 306 and 307 and the group 315, functioning as a standby path. Accordingly, the communication with the upper-layer application 301 can be continued.

In this embodiment, the NIC driver 316 monitors the link status of each NIC and provides instructions to switch transmission paths upon detecting a physical link-down, such as a failure in an NIC, a cable, or a switch. Alternatively, each NIC may be provided with an error detecting function. In that case, if an error occurs in the NIC or the like, the error detecting function detects the error and notifies the NIC driver 316 of the error. In response to the notification, the NIC driver 316 switches to the standby path. Not only when both the transmission path between the NIC 304 and the port 310 and the transmission path between the NIC 305 and the port 311 become unusable due to a failure in the switch or the like, but also when one of the transmission paths becomes unusable due to an error in the transmission path itself or an error in the NIC 304 or 305 or the port 310 or 311, the NIC driver 316 switches to the transmission path between the NICs 306 and 307 and the group 315. Under this switching condition, the bandwidth used in communication between the information processing apparatus and the switches does not decrease, so that data transmission can be continued while maintaining the transmission speed.

When detecting a physical link-down in the NIC 304 or 305, the NIC driver 316 sets the NICs 306 and 307 to new recipients of data based on the connection configuration information between the NICs and switches held inside the NIC driver 316, and activates the NICs 306 and 307. The activation of the NICs 306 and 307 is performed in the same manner as the activation of the NICs 304 and 305. Incidentally, the data received by the NIC driver 316 from the upper-layer application 301 until the activation of the NICs 306 and 307 completes and data communication becomes possible is abandoned by the NIC driver 316. The data abandoned by the NIC driver 316 is retransmitted by the upper-layer application 301. After the NIC driver 316 determines that the activation of the NICs 306 and 307 has completed, the NIC driver 316 transmits the data received from the upper-layer application 301 to the activated NICs 306 and 307.

Alternatively, the data received by the NIC driver 316 from the upper-layer application 301 until the activation of the NICs 306 and 307 completes and data communication becomes possible may not be abandoned by the NIC driver 316. Further, the NIC driver 316 may have a storage function in order to temporarily store the data received from the upper-layer application 301 until data communication becomes possible.

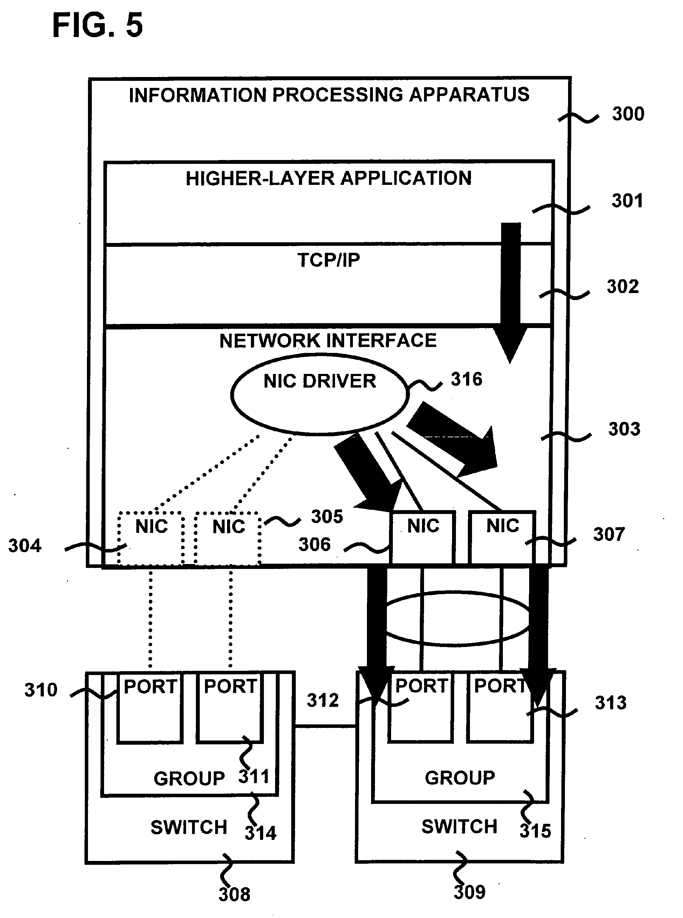

Fig. 5 shows a state where switching between the transmission paths has completed in the communication system according to the present embodiment.

When detecting an error in the transmission path between the NICs 304 and 305 and the group 314, the NIC driver 316 distributes the data from the upper-layer application 301 and outputs the data to the NICs 306 and 307. In this way, the data is transmitted through the transmission paths of the NICs 306 and 307, so that the load of the transmitted data is decentralized.

Then, the NIC driver 316 sets the NICs 304 and 305, where an error has been detected, as a standby path, and does not transmit data to the transmission path between the NICs 304 and 305 and the group 314. The NIC driver 316 monitors the link status of the transmission paths between the NICs and the switches in units of NICs 304, 305, 306, and 307. When detecting that the NICs 304 and 305 have recovered to a link-up state, the NIC driver 316 makes the switch from the transmission path of the NICs 306 and 307 to the transmission path of the NICs 304 and 305. Alternatively, the NIC driver 316 may not make the switch from the transmission path of the NICs 306 and 307 to the transmission path of the NICs 304 and 305 even when detecting that the NICs 304 and 305 have recovered. Whether the switching should be done is set by the user in advance in the setting file definition, and the information thereof is stored in the NIC driver 316. The switching from the NICs 306 and 307 to the NICs 304 and 305 is realized when the NIC driver 316 performs the same process as the switching process shown in Fig. 4.

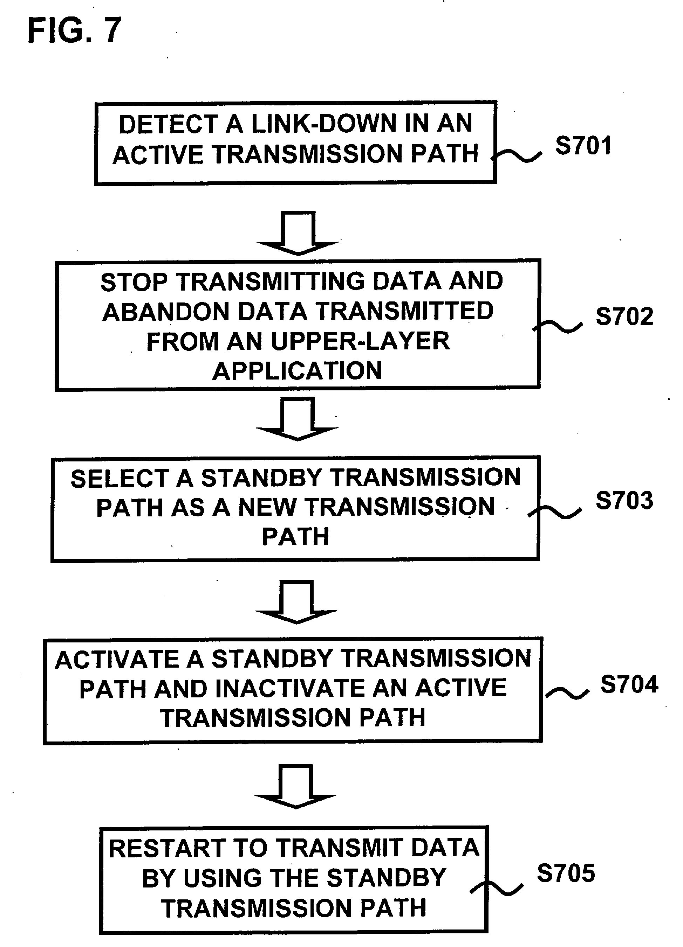

Fig. 7 is a flowchart showing a process of switching between the transmission paths according to an embodiment of the present invention.

When detecting a link-down in the active transmission path caused by an error or the like (step S701), the NIC driver 316 stops transmitting data to the active transmission path and abandons data that is transmitted from the upper-layer application 301 during the pause of data transmission (step S702).

Then, the NIC driver 316 refers to the table stored therein and selects the standby transmission path as a new transmission path to transmit data (step S703).

Then, the NIC driver 316 activates the standby transmission path and inactivates the active transmission path (step S704). Then, the NIC driver 316 restarts to transmit data by using the standby transmission path as an active transmission path (step S705).

With the above-described configuration, in the decentralization of a data transmission load realized by simultaneously using a plurality of NICs mounted in an information processing apparatus in a LAN environment using Ethernet, the NICs are internally unified into groups in units of connected switches and transmission paths are switched from one to another in units of groups of the NICs when an error occurs in one of the transmission paths. Accordingly, the transmission paths including the switches connected thereto can be switched while ensuring a communication bandwidth and can be made redundant.

Modifications and further technical expansion of the above-described information processing apparatus embodying the present invention are described below.
(1) In the above-described embodiments, the system for decentralizing a communication load and making a transmission path redundant is used in a LAN environment using Ethernet. However, embodiments of the present invention are not limited in this way. Alternatively, systems embodying the present invention may be used in a LAN environment such as a token ring network.
(2) In the above-described embodiments, four NICs are mounted on the information processing apparatus and each switch includes two ports. However, embodiments of the present invention are not limited to this configuration. The number of NICs, switches, ports, and groups is not limited.
(3) In the above-described embodiments, TCP/IP is used as a communication protocol. However, embodiments of the present invention are not limited to this configuration and another communication protocol may be used.

The technical principles extracted from the above-described embodiments of the information processing apparatus are described in the attached claims. The technical principles according to embodiments of the present invention can be interpreted based on various levels or variations, from a generic concept to a more limitative concept, and thus the scope of the following claims is to be accorded the broadest interpretation.

Embodiments of the present invention may be implemented in hardware, or as software modules running on one or more processors, or on a combination thereof. That is, those skilled in the art will appreciate that a microprocessor or other computing device may be used in practice to implement some or all of the functionality of apparatus embodying the present invention. The invention may also be embodied as one or more device apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal or in any other form.

## Claims

1. An information processing apparatus connecting to an electronic device and communicating with the electronic device, the information processing apparatus comprising:
a transmission/reception controlling unit controlling transmission/reception of data;
a connecting unit being connected to the electronic device;
a virtual connecting unit generating unit generating a virtual connecting unit by unifying at least two of a plurality of connecting units into a virtual connecting unit;
a managing unit grouping a plurality of electronic device connecting units of the electronic device connected to the connecting unit constituting the virtual connecting unit, and managing a virtual transmission path including the virtual connecting unit and the group of the electronic device connecting units; and
a switching unit switching to another virtual transmission path when the managing unit determines that an error has occurred in the virtual transmission path.

2. The information processing apparatus according to claim 1, wherein the managing unit assigns a virtual connecting unit to each of the electronic devices and manages the virtual transmission paths.

3. The information processing apparatus according to claim 1 or 2, wherein the connecting unit is a network card.

4. The information processing apparatus according to any preceding claim, wherein communication through Ethernet is performed in the transmission paths.

5. The information processing apparatus according to any preceding claim, wherein the switching unit abandons data that is transmitted during switching from the virtual transmission path where an error has occurred to another virtual transmission path.

6. The information processing apparatus according to claim 5, wherein the switching unit retransmits the abandoned data through the connecting units after the switching from the virtual transmission path where an error has occurred to another virtual transmission path has completed.

7. A communication method for communicating with an electronic device via first connecting means and second connecting means, each including a plurality of connecting units, executed by programmed processor, the communication method comprising the steps of:
determining whether a communication error has occurred in at least the presently used connecting means among the first connecting means and the second connecting means;
stopping the communication via the presently used connecting means based on the determination result;
switching from the presently used connecting means to the other connecting means by referring to information about the connection status of the connecting means; and
restarting communication with the electronic device via the other connecting means.

8. The communication method according to claim 7, wherein, the data that is transmitted during switching from a virtual transmission path where an error has occurred to another virtual transmission path is abandoned.

9. A communication load decentralizing method for decentralizing a communication load of communication with a plurality of connected electronic devices, executed by programmed processor, the communication load decentralizing method comprising the steps of:
controlling transmission/reception of data;
generating a virtual connecting unit by unifying at least two of a plurality of connecting units connected to the plurality of electronic devices into a virtual connecting unit;
grouping electronic device connecting units of the electronic device connected to the connecting units constituting the virtual connecting unit, and managing a virtual transmission path including the virtual connecting unit and the group of the electronic device connecting units; and
switching to another virtual transmission path when the managing step determines that an error has occurred in the virtual transmission path.

10. An information processing apparatus connecting to a plurality of electronic devices and communicating with the electronic devices, the information processing apparatus comprising:
first connecting means including a plurality of connecting units that connect to a first electronic device through first transmission paths and that transmit/receive data to/from the first electronic device;
second connecting means including a plurality of connecting units that connect to a second electronic device through second transmission paths and that transmit/receive data to/from the second electronic device;
controlling means for controlling data transmission/reception performed by the first connecting means and the second connecting means;
monitoring means for monitoring occurrence of an error in communication through the first connecting means and the second connecting means; and
switching means for switching between the first connecting means and the second connecting means,
wherein, if the monitoring means determines that an error has occurred in the presently used connecting means among the first connecting means and the second connecting means, the switching means makes the switch from the connecting means where the error has occurred to the other connecting means.

11. The information processing apparatus according to claim 10, further comprising:
managing means for managing the first connecting means and the second connecting means as a virtual interface.

12. The information processing apparatus according to claim 10 or 11, wherein the controlling means is provided with a management table showing the connection status and/or communication status of the first connecting means and the second connecting means.

13. A communication system including an information processing apparatus and first and second electronic devices connecting to the information processing apparatus, the information processing apparatus comprising:
first connecting means including a plurality of connecting units that connect to the first electronic device through first transmission paths and that transmit/receive data to/from the first electronic device;
second connecting means including a plurality of connecting units that connect to the second electronic device through second transmission paths and that transmit/receive data to/from the second electronic device;
controlling means for controlling data transmission/reception performed by the first connecting means and the second connecting means;
managing means for managing the first connecting means and the second connecting means as a virtual interface;
monitoring means for monitoring occurrence of an error in communication through the first connecting means and communication through the second connecting means; and
switching means for switching between the first connecting means and the second connecting means,
wherein, if the monitoring means determines that an error has occurred in the communication through the presently used connecting means among the first connecting means and the second connecting means, the switching means makes the switch from the presently used connecting means to the other connecting means.
